# EUROPEAN PATENT SPECIFICATION

(11) **EP 0 822 029 B1**
(45) Date of publication and mention of the grant of the patent: **06.02.2002**
(21) Application number: 96909348.3
(22) Date of filing: 11.04.1996
(51) Int. Cl.: B23P 19/06, G06T 7/00, B25J 13/08

(54) **METHOD OF SCREW HOLE RECOGNITION**
VERFAHREN ZUR ERKENNUNG VON EINEM SCHRAUBENLOCH
PROCEDE DE RECONNAISSANCE D'UN TROU DE VIS

(30) Priority: 11.04.1995 JP 8558495
(43) Date of publication of application: 04.02.1998
(73) Proprietor: MATSUSHITA ELECTRIC INDUSTRIAL CO., LTD., Kadoma-shi, Osaka 571-8501 (JP)
(72) Inventor: TAKANO, Misuzu, Osaka 573 (JP); ITSUZAKI, Yoshihiro, Nara 634 (JP); HORIKAMI, Kinji, Osaka 565 (JP); OKUMURA, Kazumasa, Kyoto 619-02 (JP)
(74) Representative: Crawford, Andrew Birkby
(86) International application number: PCT/JP96/01004
(87) International publication number: WO 96/32222

(56) References cited:
- JP-A- 5 237 729
- JP-A- 7 225 116
- JP-A- 7 225 117
- JP-U- 5 008 614
- CAPSON D W ET AL: "AUTOMATIC VISUAL MEASUREMENT OF SURFACE-MOUNT DEVICE PLACEMENT" IEEE TRANSACTIONS ON ROBOTICS AND AUTOMATION, vol. 6, no. 1, 1 February 1990, pages 44-52, XP000126305
- BREM L ET AL: "A MACHINE VISION SYSTEM FOR POSITIONING AN INDUSTRIAL ROBOT" PROCEEDINGS OF THE IEEE/RSJ INTERNATIONAL CONFERENCE ON INTELLIGENT ROBOTS AND SYSTEMS, RALEIGH, NC., JULY 7 - 10, 1992, vol. VOL. 3, no. -, 7 July 1992, INSTITUTE OF ELECTRICAL AND ELECTRONICS ENGINEERS, pages 1839-1846, XP000334039
- D.D. GROSSMAN ET AL.: "Concentric Part Inspection Device" IBM TECHNICAL DISCLOSURE BULLETIN, vol. 25, no. 12, May 1983, NEW YORK, US, pages 6402-6403, XP002071525

## Description

### Technical Field

The present invention relates to a method of recognizing position of a visual recognition device for screwing robot, and more particularly to a method of recognizing a position of a screw hole by detecting each position from a contrast image of plural holes taken by image pickup means.

### Background Art

Recently, the position recognizing method for detecting the position of an object from a contrast image taken by an image pickup device is widely used in visual recognition device of robots in various production facilities.

Of the position recognizing method used in such facilities, a prior art method of recognizing the position of a screw hole is described below and also in US-A-5,446,801.

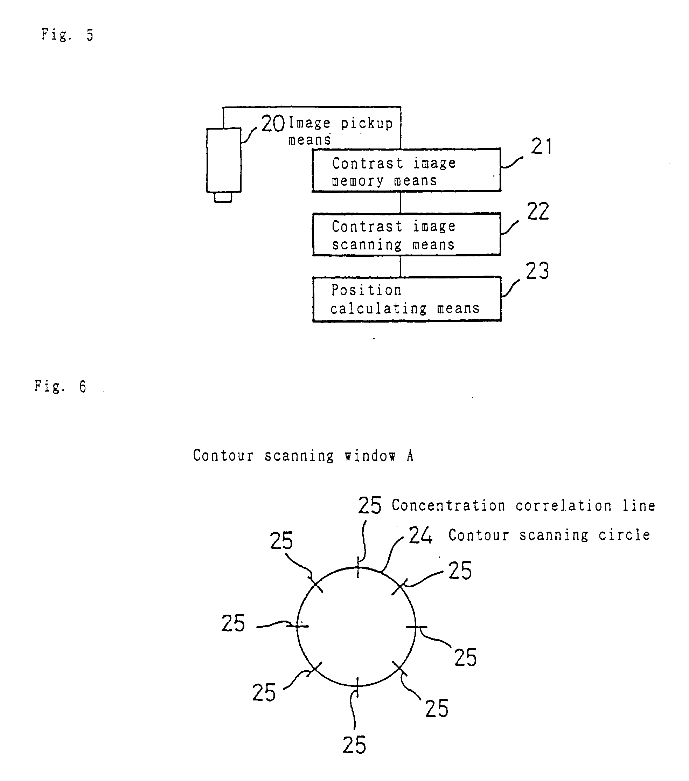

Fig. 5 is a block diagram showing a constitution of a position recognizing apparatus utilizing a conventional position recognizing method, in which the central position of a circular object is detected. In Fig. 5, reference numeral 20 is image pickup means for picking up an object not shown and issuing a video signal, 21 is contrast image memory means for storing the video signal obtained by taking by the image pickup means 20 as contrast image data, 22 is contrast image scanning means for scanning the contrast image data by a contour scanning window A described later, thereby obtaining scanning data. Reference numeral 23 is position calculating means for calculating the position of the object by using the scanning data.

Fig. 6 shows a constitution of the contour scanning window A used in Fig. 5, and in Fig. 6 reference numeral 24 is a contour scanning equal to the contour of the circular object, and 25 is a concentration correlation line for measuring the image concentration inside and outside of the contour scanning 24, orthogonal to the contour scanning 24, and the contour scanning window A is a window comprising a plurality of concentration correlation lines 25.

The position recognizing operation in the position recognizing apparatus in Fig. 5 is explained below as an application in the contour scanning window A in Fig. 6.

The video signal (image data) taken by the image pickup means 20 is stored in the contrast image memory means 21. This is the image data of the circular object, and it is scanned by the contrast image scanning means 22 in the contour scanning line A shown in Fig. 6, and is calculated by the position calculating means 23 in every concentration correlation line 25, and the position of the contour scanning window A where the number of concentration correlation lines 25 of which value is greater than the threshold is maximum is detected as the position of the circular object.

In this case, the position calculating means 23 is to calculate the absolute value of the difference between the measured concentration value of an inside point from the contour of the object on the concentration correlation line 25, and the measured concentration value of an outside point from the contour of the object.

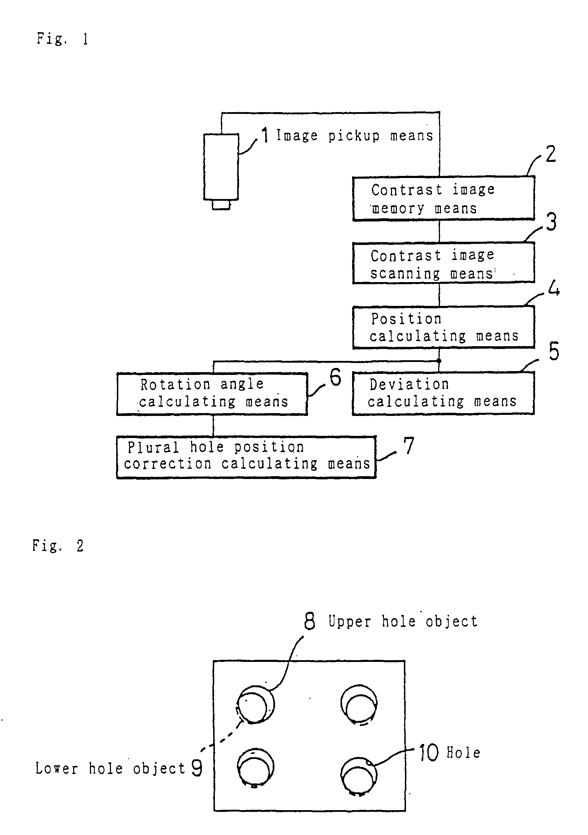

In the conventional method of recognizing the position, however, when tightening plural screws from the contrast image data shown in Fig. 2, if the deviation of upper and lower holes was large, screws were not tightened, and while recognizing each screw hole, the screws were tightened, and hence it took a long processing time in position recognition.

The invention is intended to solve the problems of the prior art, and it is hence an object thereof to present a method of recognizing a screw hole for detecting the deviation of upper hole and lower hole of plural holes, tightening the screws sequentially from the one of smaller deviation, and tightening all screws, or detecting the deviation angle of the object of tightening after detecting two points, calculating the deviation of other holes, and tightening at high speed.

### Disclosure of the Invention

To achieve the object, the invention is characterized by taking plural screw hole objects by image pickup means to obtain a contrast image, scanning the contrast image by the contrast image scanning means by a contrast scanning window comprising a contour scanning equal to the circular contour of the upper hole object on the contrast image and plural concentration correlation lines orthogonal to the contour scanning for measuring the image concentration inside and outside of the contour scanning, calculating the absolute value of the difference between the measured concentration value of the inside concentration correlation line composed of a specific number of inside image concentration measuring points, and the measured concentration value of the outside concentration correlation line composed of a specific number of outside image concentration measuring points, in every concentration correlation line, by position calculating means, detecting the position of the contour scanning window where the number of concentration correlation lines of which absolute value is greater than the specified concentration threshold value is maximum, as the position of the upper hole object, setting the scanning range of the lower hole and the contour scanning window equal to the contour of the lower hole object from that position, calculating the distance deviation amount between the lower hole central position detected in the above method, and the upper hole central position, by the deviation calculating means, determining the deviation amounts in all plural holes, tightening the screws from the one of the minimum deviation, and minimizing the deviation of the other upper and lower holes.

Alternatively, of plural screw hole objects, two points are taken by image pickup means to obtain contrast image, the rotation angle of the object of tightening is calculated from the position detected in the above method by rotation angle calculating means, and deviations of other holes are simultaneously calculated by hole position correction calculating means.

According to the invention, relating to the image data of the objects obtained by the image pickup means, the image is scanned by the contour scanning window comprising a plurality of concentration correlation lines orthogonal to the circular contour of the objects, and the position of the scanning window where the number of concentration correlation lines of which absolute value of the difference between the measured concentration value of the inside measuring point from the circular contour and the measured concentration value of the outside measuring point from the circular contour is larger than the threshold is maximum is detected as the position of the object, and thereby the deviation amount of upper and lower holes is detected, and the screws are tightened sequentially from the one of the smallest deviation of the plural holes. Or, after detecting the positions of two points out of plural holes in the above method, the rotation angles of the two points are calculated, the deviation of other holes is calculated, thereby plural screws may be tightened at high speed.

### Brief Description of the Drawings

Fig. 1 is a block diagram showing a constitution of essential parts of a position recognizing apparatus used in a method of screwing in plural holes in an embodiment of the invention;
Fig. 2 shows an example of contrast image data used in the method of screwing in plural holes in the embodiment of the invention;
Fig. 3 is a diagram showing a constitution of contour scanning window A used in the embodiment of the invention;
Fig. 4 is a detailed drawing of a part of the contour scanning window in Fig. 3;
Fig. 5 is a block diagram showing a constitution of position recognizing apparatus using a method of recognizing position in a prior art; and
Fig. 6 is a diagram showing a constitution of the contour scanning window used in the prior art in Fig. 5.

### Description of the Preferred Embodiment

Fig. 1 is a block diagram showing a constitution of essential parts of a position recognizing apparatus used in a method of screwing in plural holes in an embodiment of the invention.

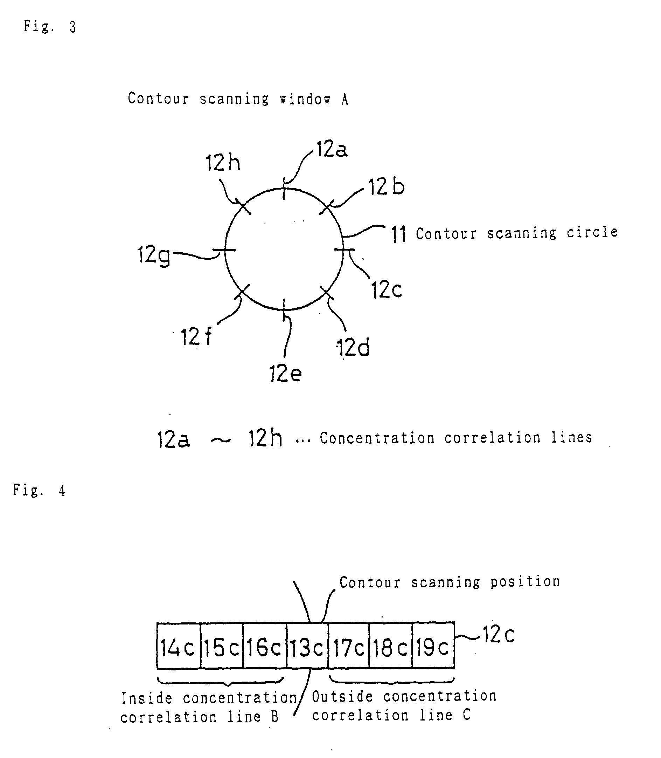

In Fig. 1, image pickup means 1 takes an object not shown and issues a video signal, and the video signal is stored in contrast image memory means 2 as contrast image data. Contrast image scanning means 3 scans the contrast image data by the contour scanning window A (see Fig. 3) to obtain scanning data, and the position of the object is calculated by using the scanning data by position calculating means 4. From the position of upper hole and position of lower hole obtained by the means 1 to 4, the deviation of upper and lower holes is calculated in deviation calculating means 5. Alternatively, from the positions of two points obtained by the means 1 to 4, the rotation angle is calculated by rotation angle calculating means 6, and the deviation of other hole positions is calculated in hole position correction calculating means 7.

Fig. 2 shows an example of the contrast image data in Fig. 1, in which reference numeral 8 is an upper hole object and 9 is a lower hole object. When using above mentioned two points method, by making the upper hole object 8 as one point and diagonally existing upper hole 10 as the other point, the detecting precision usually becomes higher.

Fig. 3 shows a configuration of contour scanning window A used in this embodiment (Fig. 1), in which reference numeral 11 denotes a contour scanning having a diameter equal to the diameter of the image of the upper hole object 8, and 12a to 12h are a plurality of concentration correlation lines orthogonal to the contour scanning 11, for measuring the image concentration inside and outside of the contour scanning circle 11.

Fig. 4 shows the detail of 12c as a representative example of the concentration correlation lines 12a to 12h of the contour scanning window A used in the embodiment, in which reference numeral 13c represents the contour scanning position of the concentration correlation line 12c, 14c, 15c, 16c are a specific number of measuring points of inside image concentration composing the inside concentration correlation line B, and 17c, 18c, 19c are a specific number of measuring points of outside image concentration composing the outside concentration correlation line C.

The image recognizing operation in this embodiment is described below by reference to Fig. 1 to Fig. 4.

First, the object not shown is taken by the image pickup means 1 shown in Fig. 1 to obtain a contrast image, and it is stored in the contrast image memory means 2. The contrast image shows the upper hole object 8 and lower hole object 9 as indicated in Fig. 2. And this will do in the case of only one hole. In this case, the operation of the embodiment for detecting the upper and lower hole p ositions or only one hole position is described below.

The contrast image scanning means 3 shown in Fig, 1 begins to scan the contrast image stored in the contrast image memory means 2 in the right direction from upper left position, by using the contour scanning window A shown in Fig. 3, and the position calculating means 4 calculates every time one image moves. That is, at every concentration correlation B, C, the absolute value of the difference of the measured concentration values 14c + 15c + 16c of the inside concentration correlation line B comprising a specific number of measuring points of inside image concentration, and the measured concentration values 17c + 18c + 19c of the outside concentration correlation line C comprising a specific number of measuring points of outside image concentration, and the position of the contour scanning window A where the number of concentration correlation lines of which absolute value is greater than the specified concentration threshold is maximum is detected as the position of the upper hole, lower hole or only one hole.

After detecting the positions of the upper and lower holes, each deviation is determined in the deviation calculating means 5, and the screws are tightened sequentially from the one of the smallest deviation.

In the case of two-point detection and correction, supposing the positions of the two points detected by the means 1 to 4 to be (x1', y1'), (x2', y2'), the correction amounts from α (x1', y1'), β (x2', y2') given preliminarily as reference position are respectively as follows.$\text{αx = x1-x1', αy = y1-y1'}$$\text{βx = x2-x2', βy = y2-y2'}$

On the basis of α, when the distance of two points is (x0, y0), the reference angle is${\text{θ0 = tan}}^{\text{-1}} \frac{\text{y0}}{\text{x0}}$ and hence the measured angle is${\text{θ1 = tan}}^{\text{-1}} \frac{\text{y0-αy+βy}}{\text{x0-αx+βx}}$ Accordingly, by the rotation angle calculating means 6, the rotation angle is calculated as follows:$\text{θ = θ1-θ0}$

Supposing the actual screwing position to be (x, y) on the basis of α, the coordinates are converted by the rotation angle as follows:$\text{x∗ = xcosθ-ysinθ+αx}$$\text{y∗ = xsinθ+ysinθ+αy}$ and hence the correction amounts zx, zy of the screwing position can be calculated as follows by the hole position correction amount calculating means 7 of the position correction amount:$\text{zx = x∗-x}$$\text{zy = y∗-y}$ Similarly, by registering plural screwing positions, the deviation of other position can be calculated from the detection of positions of two points.

Thus, plural screws can be tightened efficiently and at high speed.

As explained herein, according to the method of recognizing screw holes of the invention, by detecting the positions of upper and lower holes of the plural objects to be tightened, and tightening sequentially from the screw of the smallest deviation, the deviation can be corrected. Besides, after detecting two holes, by calculating the deviation of other holes from the rotation angle, the screws can be tightened efficiently and at high speed.

## Claims

1. A method of recognizing a screw hole, comprising taking plural screw hole objects by image pickup means (1) to obtain a contrast image, scanning the contrast image by the contrast image scanning means (3) by a contrast scanning window (A) comprising a contour scanning equal to the circular contour of the upper hole object on the contrast image and plural concentration correlation lines (12a-h, 25) orthogonal to the contour scanning for measuring the image concentration inside and outside of the contour scanning, calculating the absolute value of the difference between the measured concentration value of the inside concentration correlation line (B) composed of a specific number of inside image concentration measuring points (14c, 15c, 16c), and the measured concentration value of the outside concentration correlation line (C) composed of a specific number of outside image concentration measuring points (17c, 18c, 19c), in every concentration correlation line, by position calculating means, detecting the position of the contour scanning window (A) where the number of concentration correlation lines of which absolute value is greater than the specified concentration threshold value is maximum, as the position of the upper hole object, setting the scanning range of the lower hole and the contour scanning window equal to the contour of the lower hole object from that position, calculating the deviation amount between the lower hole central position detected as the above method and the upper hole central position by the deviation calculating means (5), and said deviation amount is calculated for all plural holes and the screws are tightened sequentially from a screw hole of the smallest deviation.

2. A method of recognizing a screw hole of claim 1, wherein the rotation angle of workpiece is calculated by rotation angle calculating means (6) from the contrast image of the two points taken by the image pickup means of plural screw hole objects and two positions detected by said method, the deviation amount in other hole position is calculated by hole position correction calculating means (7).

## Patentansprüche

1. Verfahren zum Erkennen eines Schraubenlochs, das Aufnehmen mehrerer Schraubenlochobjekte mit einer Bildaufnehmereinrichtung (1), die ein Kontrastbild erzeugt, Abtasten des Kontaktbildes mit der Kontrastbild-Abtasteinrichtung (3) mittels eines Kontrastabtastfensters (A), das eine Konturabtastung, die der kreisförmigen Kontur des oberen Lochobjektes auf dem Kontrastbild entspricht, und mehrere Konzentrationskorrelationslinien (12a-h, 25) rechtwinklig zu der Konturabtastung zum Messen der Bildkonzentration innerhalb und außerhalb der Konturabtastung umfasst, Berechnen des Absolutwertes der Differenz zwischen dem gemessenen Konzentrationswert der inneren Konzentrationskorrelationslinie (B), die aus einer bestimmten Anzahl von inneren Bildkonzentrations-Messpunkten (14c, 15c, 16c) besteht, und dem gemessenen Konzentrationswert der äußeren Konzentrationskorrelationslinie (C), die aus einer bestimmten Anzahl äußerer Bildkonzentrations-Messpunkte (17c, 18c, 19c) besteht, in jeder Konzentrationskorrelationslinie mit einer Positionsberechnungseinrichtung, Erfassen der Position des Konturabtastfensters (A), an der die Anzahl von Konzentrationskorrelationslinien, deren Absolutwert größer ist als der vorgegebene Konzentrationswellenwert, ein Maximum hat, als der Position des oberen Lochobjektes, Einstellen des Abtastbereiches des unteren Lochs und des Konturabtastfensters, so dass er der Kontur des unteren Lochobjektes von dieser Position aus entspricht, Berechnen des Betrages der Abweichung zwischen der Mittelposition des unteren Lochs, die mit dem obenstehenden Verfahren erfasst wurde, und der Mittelposition des oberen Lochs mit der Abweichungsberechnungseinrichtung (5) umfasst, wobei der Betrag der Abweichung für alle mehreren Löcher berechnet wird und die Schrauben der Reihe nach von einem Schraubenloch mit der kleinsten Abweichung aus, angezogen werden.

2. Verfahren zum Erkennen eines Schraubenlochs nach Anspruch 1, wobei der Drehwinkel des Werkstücks mit einer Drehwinkel-Berechnungseinrichtung (6) aus dem Kontrastbild der beiden Punkte, das mit der Bildabnehmereinrichtung von mehren Schraubenlochobjekten gemacht wurde, und zwei Positionen, die mit dem Verfahren erfasst wurden, berechnet wird, und der Betrag der Abweichung an anderer Lochposition durch die Lochpositionskorrektur-Berechnungseinrichtung (1) berechnet wird.

## Revendications

1. Procédé de reconnaissance d'un trou de vis, comprenant la détection de plusieurs trous de vis par des moyens de détection d'image (1) pour obtenir une image de contraste, l'analyse de l'image de contraste par les moyens d'analyse d'image de contraste (3) par une fenêtre d'analyse de contraste (A) comprenant une analyse de contour égale au contour circulaire du trou supérieur sur l'image de contraste et plusieurs lignes de corrélation de concentration (12a-h, 25) orthogonales à l'analyse de contour pour mesurer la concentration d'image à l'intérieur et à l'extérieur de l'analyse de contour, calculer la valeur absolue de la différence entre la valeur de concentration mesurée de la ligne de corrélation de concentration intérieure (B) composée d'un nombre particulier de points de mesure de concentration d'image intérieure (14c, 15c, 16c), et la valeur de concentration mesurée de la ligne de corrélation de concentration extérieure (C) composée d'un nombre particulier de points de mesure de concentration d'image extérieure (17c, 18c, 19c), dans chaque ligne de corrélation de concentration, par des moyens de calcul de position, détecter la position de la fenêtre d'analyse de contour (A) où le nombre de lignes de corrélation de concentration dont la valeur absolue est supérieure à la valeur de seuil de concentration spécifiée est maximum, en tant que position du trou supérieur, fixer la plage d'analyse du trou inférieur et la fenêtre d'analyse de contour égale au contour du trou inférieur depuis cette position, calculer la quantité d'écart entre la position centrale du trou inférieur détectée par le procédé ci-dessus et la position centrale du trou supérieur par les moyens de calcul d'écart (5), et ladite quantité d'écart est calculée pour tous les trous et les vis sont serrées séquentiellement à partir d'un trou de vis de plus faible écart.

2. Procédé de reconnaissance d'un trou de vis selon la revendication 1, dans lequel l'angle de rotation de la pièce d'ouvrage est calculé par des moyens de calcul d'angle de rotation (6) à partir de l'image de contraste des deux points détectée par les moyens de détection d'image de plusieurs trous de vis et de deux positions détectées par ledit procédé, le degré d'écart dans l'autre position de trou est calculé par les moyens de calcul de correction de position de trou (7).
